(19) **Europäisches Patentamt**

**European Patent Office**

**Office européen des brevets**

(11) Publication number: **0 138 256**
**B1**

(12) **EUROPEAN PATENT SPECIFICATION**

(45) Date of publication of patent specification: **27.01.88**

(21) Application number: **84201351.8**

(22) Date of filing: **20.09.84**

(51) Int. Cl.⁴: **G 01 F 23/42**

(54) **Liquid level gauge.**

(30) Priority: **29.09.83 NL 8303327**

(43) Date of publication of application:
**24.04.85 Bulletin 85/17**

(45) Publication of the grant of the patent:
**27.01.88 Bulletin 88/04**

(84) Designated Contracting States:
**AT DE FR GB IT NL SE**

(56) References cited:
**US-A-1 503 179**
**US-A-1 557 867**
**US-A-2 611 270**

**ENRAF-NONIUS (Delft), Specification sheet 812-1-E, March 1980**

(73) Proprietor: **N.V. Verenigde Instrumentenfabrieken ENRAF-NONIUS Röntgenweg 1 NL-2624 BD Delft (NL)**

(72) Inventor: **Wafelman, Henk Rudolf Torenweg 37 NL-4328 KA Haamstede (NL)**

(74) Representative: **de Vries, Johannes Hendrik Fokke et al Octrooibureau Los en Stigter B.V. P.O. Box 20052 NL-1000 HB Amsterdam (NL)**

EP 0 138 256 B1

Courier Press, Leamington Spa, England.

## Description

The invention relates to a liquid level gauge, comprising a sensor adapted to contact the liquid and suspended on a measuring cable or measuring tape, which is wound on a rotatable drum to which a torque is exerted by a spring means, said torque being opposed to the torque exerted by the sensor on the drum, wherein the drum is rotatable to substantially balance said torques.

Such a liquid level gauge is described in Specification Sheet 812-1-E of March 1980 of the applicant and is normally used for measuring the liquid level in a tank in which a liquid product is stored. An upward force is exerted by the liquid product to the sensor which can be made as a float or a displacer. If the liquid level rises or falls, the drum is rotated in such a manner that the torque exerted by the spring means will be substantially balanced by the torque exerted by the sensor to the drum. The rotation of the drum can be provided by a spring of the tensator type which also exerts the torque or by a servo system. The drum can be coupled to a display means indicating the liquid level in the tank. However it is also possible to drive the display means directly by the measuring tape.

At the known liquid level gauge the problem arises that due to surface flows or turbulences the sensor can be displaced from the desired position perpendicular below the suspending point on the drum. Thereby measuring faults may occur. At the known liquid level gauge it is attempted to overcome this problem by means of a standpipe in which the sensor is provided, or by means of guiding wires for the sensor. However, it is not desired to have a standpipe in tanks in which the product is regularly changed in view of the difficult cleaning thereof. Moreover mounting a standpipe in existing tanks is rather expensive. Providing guiding wires for the sensor also mostly meets objections. For example guiding wires give no protection against a vertical wash of waves in the tank. When a product is blown back in a tank by means of compressed nitrogen which is normal practice at transshipment trades, strong risings and fallings suddenly develop in the tank. Thereby the sensor is first forced upwards and then freely falls downwards. Due to the occurring forces breakage in the measuring cable or measuring tape may arise or when a magnetic coupling is used the liquid level gauge can slip.

US—A—2.611.270 discloses an automatic fuel gauge with a measuring band disposed over a drum or roller. Both ends of the measuring band depend downwardly into the tank containing the liquid the level of which has to be measured. The measuring band is provided with calibrations which can be viewed at the roller. Secured to one of the ends of the measuring band is a weight member and secured to the other end is a float wherein another weight member is arranged close to the float.

US—A—1.557.867 discloses a level gauge which utilizes a drum with a counterbalancing torsion spring.

The invention aims to provide a liquid level gauge of the above-mentioned kind, wherein the disadvantages of the prior art are obviated in a simple but nevertheless effective manner.

To this end the liquid level gauge according to the invention is characterized in that a stabilizer weight is inserted in the measuring cable or the measuring tape at a relatively short distance above the sensor.

In this manner it is obtained that the stabilizer weight also will maintain the measuring cable or measuring tape substantially vertically below the suspending point on the drum at surface flows or turbulances so that no measuring faults will occur thereby. Because the mass of the sensor can be chosen smaller now, the forces which will occur when the sensor freely falls downwards, will be substantially decreased so that faults do not arise thereby. The application of a standpipe or guiding wires is not necessary anymore at the liquid level gauge according to the invention.

According to an embodiment of the invention the mass of the sensor may be at least some times smaller than the mass of the stabilizer weight, wherein the mass of the sensor has at least such a value that in operation the friction occurring in the liquid level gauge can be overcome by a predetermined safety factor.

Preferably, the measuring cable or measuring tape is fixed at least substantially in the centre of gravity of the sensor. Thereby swinging motions of the sensor will cause substantially no reaction forces in the measuring cable or measuring tape.

According to a favourable embodiment of the invention the portion of the measuring cable or measuring tape lying between the sensor and the stabilizer weight, is made as a flexible wire.

Preferably, the stabilizer weight is made of a material with a high specific mass, wherein the stabilizer weight is made with a torpedo shape. Thereby any liquid falling downwards or splashed upwards will hardly have any effect on the stabilizer weight.

The invention will hereinafter be further explained by reference to the drawings in which an embodiment of the liquid level gauge of the invention is shown.

Fig. 1 partly shows a schematic perspective view of a liquid level gauge.

Fig. 2 is a schematic view of a liquid level gauge according to the invention.

Fig. 3 shows a cross section in a larger scale of the sensor of fig 2.

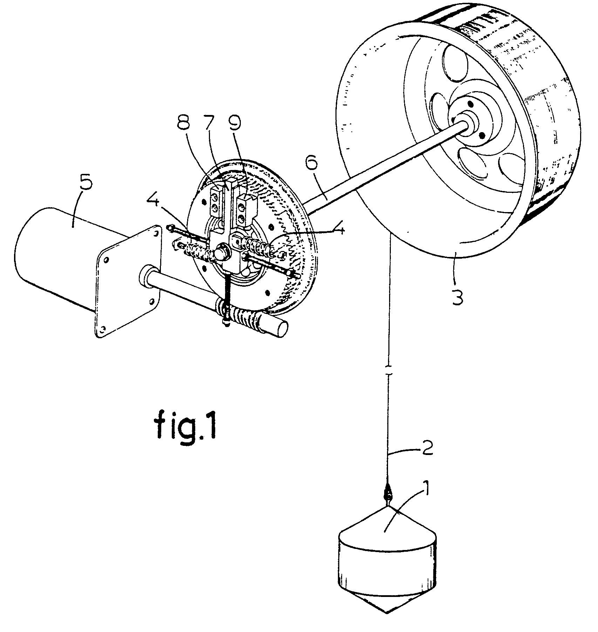

Referring to fig. 1 there is partly shown a known liquid level gauge provided with a sensor 1 adapted to cooperate with a liquid and suspended on a measuring cable 2. The measuring cable 2 is wound on a rotatable drum 3 to which a torque is exerted by springs 4, said torque being opposed to the torque exerted by the sensor 1 to the drum 3. By means of a servo system of which only the servo motor 5 is shown, the drum 3 is rotatable in such a manner that both said torques keep each other in balance. In the state of balance an arm 7 mounted on the drum shaft 6 lies between two detectors 8 and 9.

When the liquid level changes the arm 7 will excite the detector 8 or 9 due to the thereby changed upward force exerted on the sensor 1, whereby the servo system will operate the servo motor 5 and the measuring cable 2 is unwound from the drum 3 or wound on the drum 3 so long until the upward force exerted on the sensor 1 has such a value that both torques are in balance with each other again. The drum 3 is coupled in a manner not further shown with a display means indicating the height of the liquid level.

For an accurate operation of the liquid level gauge the sensor should be substantially perpendicular below the suspending point on the drum 3. Due to surface flows or turbulences in the liquid within a not shown tank the sensor can be pulled out of this desired position. Moreover by suddenly occurring strong risings and fallings in the liquid the sensor 1 can be forced upwardly and subsequently freely fall downwardly whereby the liquid level gauge can become faulty.

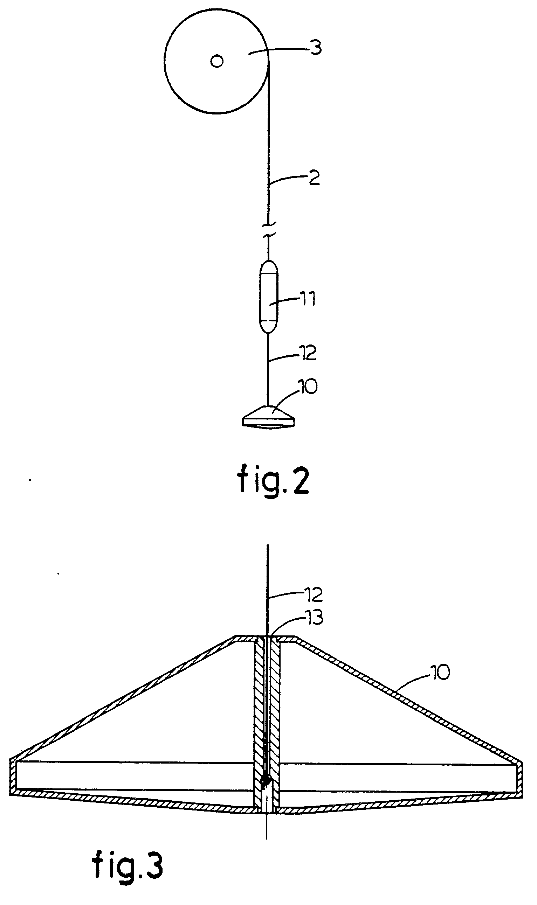

These problems are obviated in a very simple manner at the liquid level gauge only schematically shown in fig. 2.

At the liquid level gauge according to fig. 2 a stabilizer weight is incorporated in the measuring cable 2 at a relatively short distance above the sensor 10. The sensor 10 is connected to the stabilizer weight 11 by a flexible wire 12. The distance between the stabilizer weight 11 and the sensor 10 is chosen that great that the stabilizer weight substantially cannot contact the liquid. Depending on the circumstances this distance can be 10-50 cm for example.

Preferably, the mass of the stabilizer weight 11 is as great as possible and the mass of the sensor 10 is chosen preferably as small as possible. When the over-all mass with which the drum 3 should be able to be loaded amounts upto 224 g for example and the measuring straining in the measuring cable 2 is adjusted at 208 g, the mass of the stabilizer weight 11 is for example 185 g and the mass of the sensor 10 in the order of 39 g. The mass of the sensor is then still such that the friction forces which are caused by the mechanical parts of the liquid level gauge, as bearings and the like, can be overcome at a varying liquid level by a predetermined safety factor.

Preferably the stabilizer weight 11 is made of a material with a high specific mass, for example stainless steel, and is made with a torpedo shape. Thereby any liquid falling downwards or splashing upwards will hardly have any effect on the stablizer weight.

At the liquid level gauge of fig. 2 the stabilizer weight 11 will remain suspending vertically below the suspending point on the drum 3 independent of the forces exerted on the sensor 10 by any surface flows or turbulences so that the sensor 10 will hardly drift off because of surface flows or turbulences and no auxiliary means are necessary to keep the sensor 10 perpendicular below the suspending point on the drum 3. Because the mass of the sensor 10 is much smaller than the mass of the stabilizer weight 11 the acceleration forces which can appear in the measuring cable 2 during opertion are restricted so that a breakage in the measuring cable 2 can not occur and no slipping of a magnet coupling which may be mounted in the liquid level gauge can take place.

As appears from fig. 3, the flexible wire 12 is fixed substantially in the centre of gravity of the sensor 10. To this end a through hole 13 is formed in the sensor 10 in which the end of the wire 12 extends. Thereby swinging motions of the sensor 10 will cause substantially no reaction forces in the wire 12.

It is noted that instead of the measuring cable 2 it is also possible to use a measuring tape. Further, instead of a servo system the liquid level gauge of the invention may be equipped with a spring of the tensator type which in this case also exerts the torque on the drum 3 required for the operation of the liquid level gauge.

The invention is not restricted to the above-described embodiment which can be varied in a number of ways within the scope of the invention.

**Claims**

1. Liquid level gauge, comprising a sensor (10) adapated to contact the liquid and suspended on a measuring cable (2) or measuring tape, which is wound on a rotatable drum (3) to which a torque is exerted by a spring means (4), said torque being opposed to the torque exerted by the sensor (10) on the drum (3), wherein the drum (3) is rotatable to substantially balance said torques, characterized in that a stabilizer weight (11) is inserted in the measuring cable (2) or the measuring tape at a relatively short distance above the sensor (10).

2. Liquid level gauge according to claim 1, characterized in that the mass of the sensor (10) is at least sometimes smaller than the mass of the stabilizer weight (11), wherein the mass of the sensor (10) has at least such a value that in operation the friction occurring in the liquid level gauge can be overcome by a predetermined safety factor.

3. Liquid level gauge according to claim 1 or 2, characterized in that the measuring cable (2) or measuring tape is fixed at least substantially in the centre of gravity of the sensor (10).

4. Liquid level gauge according to any one of the preceding claims, characterized in that the portion of the measuring cable (2) or measuring tape lying between the sensor (10) and the stabilizer weight (11), is made as a flexible wire (12).

5. Liquid level gauge according to any one of the preceding claims, characterized in that the stabilizer weight (11) is made of a material with a high specific mass.

6. Liquid level gauge according to any one of the preceding claims, characterized in that the stabilizer weight (11) is made with a torpedo shape.

7. Liquid level gauge according to any one of the preceding claims, characterized in that the distance between the sensor (10) and the stabilizer weight (11) amounts up to 10—50 cm.

## Patentansprüche

1. Flüssigkeitsstandmesser, bestehend aus einem die Flüssigkeit berührenden Sensor (10), welcher an einem Meßkanal (2) oder Meßband aufgehängt ist, welches auf einer verdrehbaren Trommel (3) aufgewickelt ist, auf welche durch eine Federung (4) ein Drehmoment ausgeübt wird, wobei dieses Drehmoment dem vom Sensor (10) auf die Trommel (3) ausgeübten Drehmoment entgegenwirkt, wobei die Trommel verdrehbar ist, um diese Drehmomente im wesentlichen auszugleichen, dadurch gekennzeichnet, daß in das Meßkabel (2) oder Meßband in einem relativ kurzen Abstand über dem Sensor (10) ein Stabilisierungsgewicht (11) eingesetzt ist.

2. Flüssigkeitsstandmesser nach Ansprunch 1, dadurch gekennzeichnet, daß die Masse des Sensors (10) zumindest um das Mehrfache kleiner ist als die Masse des Stabilisierungsgewichtes (11), wobei die Masse des Sensors (10) wenigstens einen derartigen Wert besitzt, daß die im Flüssigkeitsstandmesser während des Betriebes auftretende Reibung durch einen vorgegebenen Sicherheitsfaktor überwunden werden kann.

3. Flüssigkeitsstandmesser nach Anspruch 1 oder 2, dadurch gekennzeichnet daß das Meßkabel (2) oder Meßband zumindest im wesentlichen im Schwerpunkt des Sensors (10) befestigt ist.

4. Flüssigkeitsstandmesser nach irgendeinem der vorhergehenden Ansprüche, dadurch gekennzeichnet, daß der zwischen dem Sensor (10) und dem Stabilisierungsgewicht (11) befindliche Teil des Meßkabels (2) oder Meßbandes als ein flexibler Draht (12) ausgebildet ist.

5. Flüssigkeitsstandmesser nach irgendeinem der vorhergehenden Ansprüche, dadurch gekennzeichnet, daß das Stabilisierungsgewicht (11) aus einem Material mit einer großen Dichte hergestellt ist.

6. Flüssigkeitsstandmesser nach irgendeinem der vorhergehenden Ansprüche, dadurch gekennzeichnet, daß das Stabilisierungsgewicht (11) in Form eines Torpedos hergestellt ist.

7. Flüssigkeitsstandmesser nach irgendeinem der vorhergehenden Ansprüche, dadurch gekennzeichnet, daß der Abstand zwischen Sensor (10) und Stabilisierungsgewicht (11) bis zu 10—50 cm beträgt.

## Revendications

1. Jauge de niveau de liquide, comprenant un capteur (10) concu pour entrer en contact avec le liquide et suspendu sur un câble (2) de mesure ou un ruban de mesure, qui est enroulé sur un tambour rotatif (3) auquel un couple est appliqué par des moyens à ressort (4), lequel couple étant opposé au couple exercé par le capteur (10) sur le tambour (3), le tambour (3) pouvant tourner pour équilibrer sensiblement lesdits couples, caractérisée en ce qu'un poids stabilisateur (11) est inséré dans le câble (2) de mesure ou dans le ruban de mesure à une distance relativement courte audessus du capteur (10).

2. Jauge de niveau de liquid selon la revendication 1, caractérisée en ce que la masse du capteur (10) est d'au moins plusieurs fois inférieure à la masse du poids stabilisateur (11), la masse de capteur (10) ayant au moins une valeur telle qu'en fonctionnement, le frottement apparaissant dans la jauge de niveau de liquide puisse être vaincu avec un facteur de sécurité prédéterminé.

3. Jauge de niveau de liquide selon la revendication 1 ou 2, caractérisée en ce que le câble (2) de mesure ou le ruban de mesure est fixé au moins sensiblement au centre de gravité du capteur (10).

4. Jauge de niveau de liquide selon l'une quelconque des revendications précédentes, caractérisée en ce que le troncon du câble (2) de mesure ou du ruban de mesure s'étendant entre le capteur (10) et le poids stabilisateur (11) est réalisé sous la forme d'un fil flexible (12).

5. Jauge de niveau de liquide selon l'une quelconque des revendications précédentes, caractérisée en ce que le poids stabilisateur (11) est réalisé en une matière à haute densité.

6. Jauge de niveau de liquide selon l'une quelconque des revendications précédentes, caractérisée en ce que le poids stabilisateur (11) est réalisé sous la forme d'une torpille.

7. Jauge de niveau de liquide selon l'une quelconque des revendications précédentes, caractérisée en ce que la distance comprise entre le capteur (10) et le poids stabilisateur (11) s'élève à 10—50 cm.

fig.1

fig.2

fig.3